# EUROPEAN PATENT SPECIFICATION

(11) **EP 1 375 096 B1**
(45) Date of publication and mention of the grant of the patent: **30.03.2005**
(21) Application number: 02016649.2
(22) Date of filing: 25.07.2002
(51) Int. Cl.: B27N 3/00, B26D 7/00, B23Q 7/00

(54) **Board processing unit**
Plattenbearbeitungseinheit
Unité d'usinage de planches

(30) Priority: 21.06.2002 JP 2002180827
(43) Date of publication of application: 02.01.2004
(73) Proprietor: HEIAN CORPORATION, Hamamatsu-shi, Shizuoka-ken (JP)
(72) Inventor: Kubota, Hirotosh, Hamamatsu-shi, Shizuoka-ken (JP); Suzuki, Hiroyoshi, Hamamatsu-shi, Shizuoka-ken (JP)
(74) Representative: Kirschner, Klaus Dieter, Dipl.-Phys.

(56) References cited:
- EP-A- 1 207 028
- WO-A-00/67972

## Description

The present invention relates to a board processing unit without use of a holder or a supporting board by passing a tool of the board processing unit between first upper and lower conveyers and second upper and lower conveyers and by contacting the tool with only the board.

EP-1207028-A discloses the closest prior art.

In a prior numerical control unit, a head holding a tool is laterally moved along a beam, a suction table is longitudinally moved to the moving direction of the head, whereby a process board sucked on the suction table is processed by the tool of the numerical control unit.

However, in such numerical control unit, when the process board is sucked on the suction table, and the process board is processed by the tool, the tool may pass through the process board. Therefore, when the process board is directly mounted on the suction table, the suction table is injured by the tool. Because of avoiding the injury of the tool, a supporting board having suction holes as same as the suction table is mounted on the suction table, the process board is mounted on the supporting board. Because the supporting board has the suction holes corresponding to the process board, when the different type of the process board is mounted on the supporting board, the supporting board corresponding to the different type of the process board is mounted on the suction table, a working for changing the supporting board is troublesome, and this working performance is unavailable.

It is, therefore, the primary object of the present invention to provide a board processing unit by which a process board can be processed without a supporting board.

It is another object of the present invention to provide a board processing unit in which under faces of first and second upper carrying belts are constructed to be flat, upper faces of first and second lower carrying belts are constructed to be flat, and a process board is held and passed between the first and second upper carrying belts and the first and second lower carrying belts and is processed by a tool.

In order to accomplish the above and other object, the present invention comprises a board processing unit as claimed in claim 1. Advantageous embodiments of the invention are claimed in the sub-claims.

Embodiments of the invention are now described with referce to the drawings in which:
Fig. 1 shows a side view of a board processing unit of an embodiment in the present invention;
Fig. 2 shows a front view of a board processing unit in Fig. 1;
Fig. 3 shows a plane view of a board processing unit in Fig. 1;
Fig. 4 shows a block diagram of control equipment for first, second, third and fourth servomotors of the board processing unit in Fig. 1;
Fig. 5 shows a side view of a board processing unit of the other embodiment in the present invention;
Fig. 6 shows a side view of a board processing unit of the other embodiment in the present invention;
Fig. 7 shows a front view of a board processing unit in Fig. 6;
Fig. 8 shows a plane view of a board processing unit in Fig. 6; and
Fig. 9 shows a side view of a board processing unit of the other embodiment in the present invention.

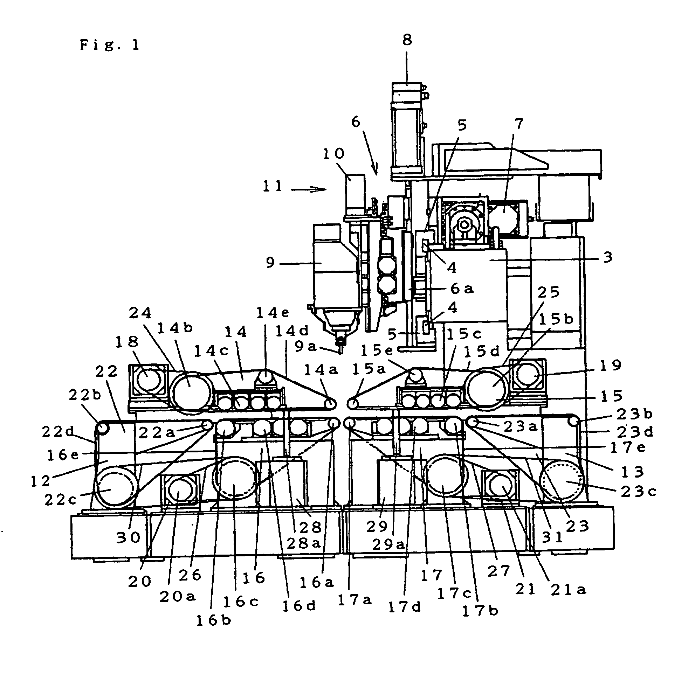

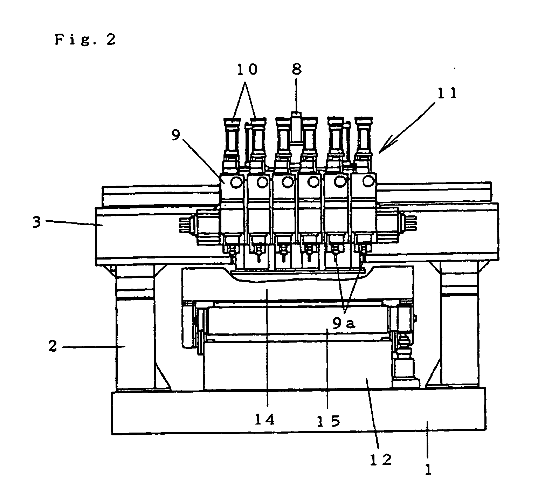

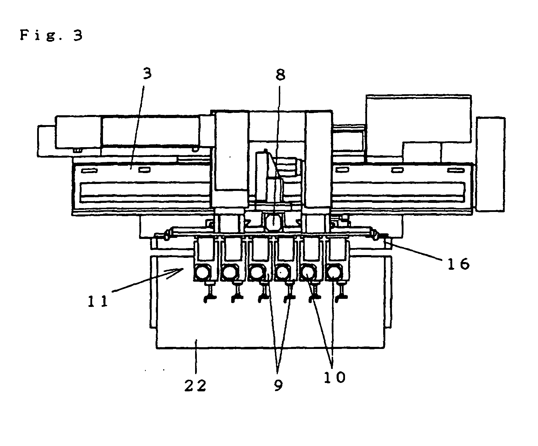

Referring to Figs. 1, 2 and 3, in a numerical control router, a beam 3 is laterally fixed an upper portion of support columns 2 fixed a support base 1, rails 4 are fixed the beam 3, bearings 5 engaged the rails 4 are fixed a head structure 6 which is moved and positioned by a servomotor 7 mounted the end of the beam 3, a rising and lowering member 6a mounted on the head structure 6 is moved and positioned to a predetermined position by a servomotor 8, plural heads 9 mounted the rising and lowering member 6a are lowered a predetermined position a cylinder 10 and tolls 9a are attached to plural heads respectively.

Before the numerical control router 11 mounted on the support base 1, a first upper conveyer 14 is mounted on a supporting base 12, a second upper conveyer 15 is mounted on a supporting base 13 in parallel of the first upper conveyer 14, a first lower conveyer 16 is mounted the support base 1 in the lower portion of the first upper conveyer 14, a second lower conveyer 17 is mounted the support base 1 in the lower position of the second upper conveyer 15, a first servomotor 18 is provided near the first upper conveyer 14, a second servomotor 19 is provided near the second upper conveyer 15, a third servomotor 20 is provided near the first lower conveyer 16, a fourth servomotor 21 is provided near the •second lower conveyer 17, a carry-in conveyer 22 is provided near the first lower conveyer 16 and a carry-out conveyer 23 is provided near the second lower conveyer 17.

In the first and second conveyers 14 and 15, small rollers 14a and 15a are provided in an opposite portion of the first and second upper conveyers 14 and 15, a large rollers 14b and 15b are provided in remote position from the small rollers 14a and 14b, a plurality of small rollers 14c and 15c are provided with a flat lower face between the small rollers 14a and 15a and the large rollers 14b and 15b, belts 14d and 15d are respectively wounded the small rollers 14a and 15a, the large rollers 14b and 15b and the plural small rollers 14c and 15c, and tension rollers 14e and 15e are provided for holding tension in the upper portion of the plural small rollers 14c and 15c.

In the first and second lower conveyer 16 and 17, small rollers 16a and 17a are provided in the opposite position of the first and second lower conveyer 16 and 17, middle rollers 16b and 17b are provided in the parallel and remote position of the small rollers 16a and 17a, large rollers 16c and 17c are provided in the lower position of the middle rollers 16b and 17b, a plurality of middle flat rollers 16d and 17d are provided between the small rollers 16a and 17a and the middle rollers 16b and 17b, and belts 16e and 17e are wounded the small rollers 16a and 17a, the middle rollers 16b and 17b, the large rollers 16c and 17c and the plural flat middle rollers 16d and 17d.

A belt 24 is wounded the large roller 14b of the first upper conveyer 14 and a pulley 18a of the first servomotor 18, a belt 25 is wounded the large roller 15b of the second upper conveyer 15 and a pulley 19a of the second servomotor 19, a belt 26 is wounded the large roller 16c of the first lower conveyer16 and a pulley 20a of the third servomotor 20, a belt 27 is wounded the large roller 17c of the second lower conveyer 17 and a pulley 21 a of the fourth servomotor 21, first and second gear boxes 28 and 29 are provided in the lower position of the plural middle rollers 16d and 17d of the first and second lower conveyer 16 and 17 to rise and lower the first and second upper conveyers 16 and 17 by ball thread 28a and 29a of the first and second gear boxes 28 and 29.

In the carry-in conveyer 22 near the first upper conveyer 16, a small roller 22a is provided near the middle roller 16b of the first lower conveyer 16, a small roller 22b is provided in the parallel and remote position of the small roller 22a, a large roller 22c is provided in the lower position of the small roller 22b, a belt 22d is wounded the small rollers 22a and 22b and the large roller 22c, and the upper face of the belt 22d between the small rollers 22a and 22b is constructed in parallel with the upper face of the first lower conveyer 16.

In the carry-out conveyer 23 near the second lower conveyer 17, a small roller 23a is provided near the middle roller 17b of the first lower conveyer 17, a small roller 23b is provided in the remote portion of the small roller 23b, a large roller 23c is provided in the lower position of the small roller 23b, a belt 23d is wounded the small rollers 23a and 23b and the large roller 23c, the upper face of the belt 23d between the small rollers 23a and 23b is constructed in parallel with the upper face of the second lower conveyer 17, a belt 30 is wounded the large roller 16c of the first lower conveyer 16 and the large roller 22c of the carry―in conveyer 22, and a belt 23 is wound the large roller 17c of the second lower conveyer 17 and the large roller 23c of the carry-out conveyer 23.

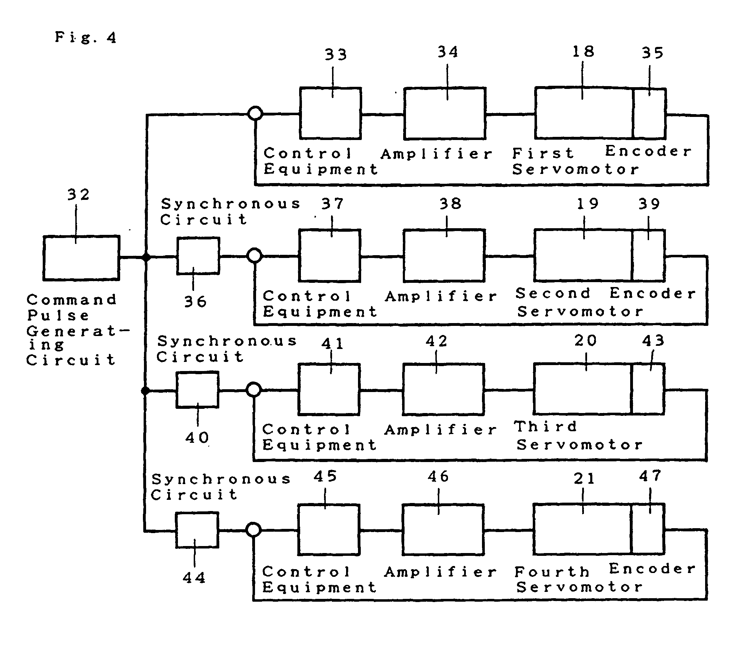

Referring Fig. 4, in a control equipment, output of a command pulse generating circuit 32 is put in a control circuit 33, output of the control circuit 33 is put in an amplifier 34, output of the amplifier 34 is put in the first servomotor 18, and output of an encoder 35 attached to the rotating shaft of the first servomotor 18 is fed back the output of the command pulse generating circuit 32.

The output of the command pulse generating circuit 32 is put in a synchronous circuit 36, output of synchronous circuit 36 is put in a control circuit 37, output of the control circuit 37 is put in an amplifier 38, output of the amplifier 38 is put in the second servomotor 19, and output of an encoder 39 attached to the rotating shaft of the servomotor 19 is put in the output of synchronous circuit 36.

The output of the command pulse generating circuit 32 is put in a synchronous circuit 40, output of synchronous circuit 40 is put in a control circuit 41, output of the control circuit 42 is put in an amplifier 43, output of the amplifier 43 is put in the third servomotor 20, and output of an encoder 43 attached to the rotating shaft of the servomotor 20 is put in the output of synchronous circuit 42.

The output of the command pulse generating circuit 32 is put in a synchronous circuit 44, output of synchronous circuit 44 is put in a control circuit 45, output of the control circuit 45 is put in an amplifier 46, output of the amplifier 46 is put in the third servomotor 21, and output of an encoder 47 attached to the rotating shaft of the servomotor 21 is put in the output of synchronous circuit 44.

In the control equipment, when command pulses from the command pulse generating circuit 32 are put in the control circuit 33, the output of the control circuit 33 is amplified by the amplifier 34 and is put in the first servomotor 18, and the pulses proportioned to the rotating number of the first servomotor 18 are generated from the encoder 35 are put in the output of the command pulse generating circuit 32 and are subtracted from the command pulses, whereby the first servomotor 18 is rotated by the subtracted command pulses.

When command pulses from the command pulse generating circuit 32 are put in the synchronous circuit 36, the synchronous command pulses multiplied a coefficient ki are generated from the synchronous circuit 36 to synchronize the second servomotor 19 with the rotation number of the first servomotor 18, the synchronous command pulses are put in the control circuit 37, the output of the control circuit 37 is amplified by the amplifier 38 and is put in the second servomotor 19, and the pulses proportioned to the rotating number of the second servomotor 19 are generated from the encoder 39 are put in the output of the synchronous circuit 36 and are subtracted from the synchronous command pulses from the synchronous circuit 36, whereby the second servomotor 19 is controlled and rotated to synchronize with the rotation number of the first servomotor 18 by the subtracted command pulses.

When command pulses from the command pulse generating circuit 32 are put in the synchronous circuit 40, the synchronous command pulses multiplied a coefficient k2 are generated from the synchronous circuit 40 to synchronize the third servomotor 20 with the rotation number of the first servomotor 18, the synchronous command pulses are put in the control circuit 41, the output of the control circuit 41 is amplified by the amplifier 42 and is put in the third servomotor 20, and the pulses proportioned to the rotating number of the third servomotor 20 are generated from the encoder 43 are put in the output of the synchronous circuit 40 and are subtracted from the synchronous command pulses from the synchronous circuit 40, whereby the third servomotor 20 is controlled and rotated to synchronize with the rotation number of the first servomotor 18 by the subtracted command pulses.

When command pulses from the command pulse generating circuit 32 are put in the synchronous circuit 44, the synchronous command pulses multiplied a coefficient k3 are generated from the synchronous circuit 44 to synchronize the fourth servomotor 21 with the rotation number of the first servomotor 18, the synchronous command pulses are put in the control circuit 45, the output of the control circuit 45 is amplified by the amplifier 46 and is put in the fourth servomotor 21, and the pulses proportioned to the rotating number of the fourth servomotor 21 are generated from the encoder 47 are put in the output of the synchronous circuit 44 and are subtracted from the synchronous command pulses from the synchronous circuit 44, whereby the fourth servomotor 21 is controlled and rotated to synchronize with the rotation number of the first servomotor 18 by the subtracted command pulses.

As stated above, in the above board processing unit of the present embodiment, when the process board is carried from the carry-in conveyer 22 between the first upper conveyer 14 and the first lower conveyer 16, the first gear box 28 is driven by a servomotor (not shown), and the process board is pushed by the first upper conveyer 14 lowered by the ball thread 28a. when the first upper conveyer 14 and the first lower conveyer 16 are driven by the first and second servomotors 18 and 19, the process board is carried between the second upper and lower conveyers 15 and 17, the gear box 29 is driven by a servomotor (not shown), the second upper conveyer 15 is lowered by the ball thread 29a, and the process board is positioned between the second upper and lower conveyers 15 and 17. Then the first, second, third and fourth servomotors 18, 19, 20 and 21 are controlled and driven to synchronize with the rotation number of the first servomotor 18, and the process board is positioned by the first, second, third and fourth servomotors 18, 19, 20 and 21 and is processed by the tool 9a of the head 9 passed through the opposite portions between the first upper and lower conveyers 14 and 16 and the second upper and lower conveyers 15 and 17.

Therefore, because the tool 9a of the head 9 is not contacted with the belts 14d and 15d of the first and second upper conveyers 14 and 15 and the belts 16e and 17e of the first and second lower conveyers 16 and 17, the belts 14d, 15d 16e and 17e are not injured by the tool 9a of the head 9 and the support board for supporting the process board is not need.

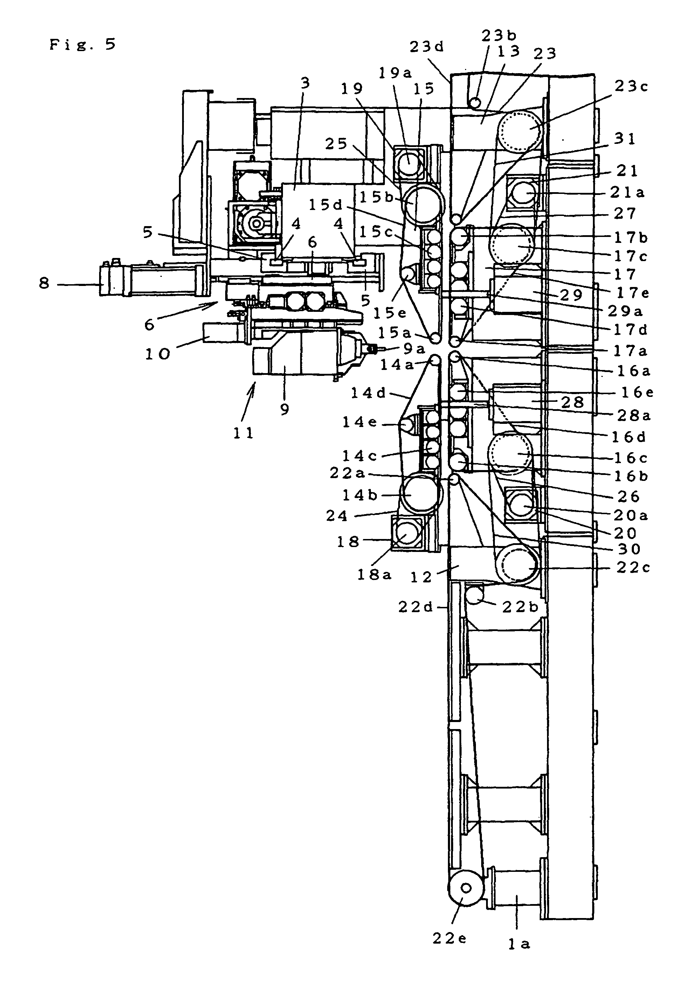

Referring to Fig. 5, 1 designates a support base, 2 a support columns, 3 a beam, 4 rails, 5 bearing, 6 a head structure, 7 a servomotor 8 a servomotor 9 plural head, 10 a cylinder, 11 a numerical control router, 12 and 13 support bases, 14 a first upper conveyer, 15 a second upper conveyer, 16 a first lower conveyer, 17 a second lower conveyer, 18 a first servomotor, 19 a second servomotor, 20 a third servomotor, 21 a fourth servomotor, 28 a first gear box, and 29 a second gear box, and these constitutions are the same as those in the above embodiment in Fig. 1 and the explanation of these constitutions is omitted. In the carry-in conveyer 22, a large roller 22e is provided on a support base 1a in the remote position from the small roller 22a, the small roller 22b is provided lower than the large roller 22e, the belt 22d is wound the small rollers 22a and 22b and the large rollers 22c and 22d, and the carry-out conveyer 23 (not shown) is seine as the carry-in conveyer 22.

In the embodiment in Fig. 5, when the long process board is processed, the process board is not bent and not curved and is continuously processed.

In the above embodiments, though the process board is processed by the numerical control router, the process board is processed by the other process machine.

In the above embodiment, though the carry-in conveyer 22 and the carry-out conveyer 23 are respectively separated the first and second lower conveyers 16 and 17, the carry-in conveyer 22 and the first lower conveyer 16 is constituted in unity whereby the belt 16e of the first lower conveyer 16 is wound the small roller 22b and the large roller 22c of the carry-in conveyer 22, the carry-out conveyer 23 and the second conveyer 17 are constituted in unity whereby the belt 17e of the second lower conveyer 17 is wound the small roller 23b and the large roller 23c of the carry-out conveyer 23.

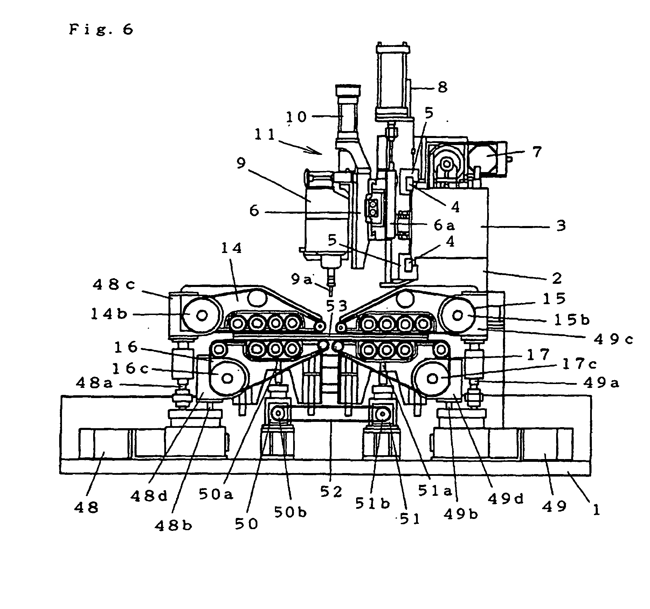

Referring to Figs. 6, 1 designates a support base, 2 a support columns, 3 a beam, 4 rails, 5 bearing, 6 a head structure, 7 a servomotor, 8 a servomotor, 9 plural head, 10 a cylinder, 11 a numerical control router, 12 and 13 support bases, 14 a first upper conveyer, 15 a second upper conveyer, 16 a first lower conveyer, 17 a second lower conveyer, and these constitutions are the same as those in the above embodiment in Fig. 1 and the explanation of these constitutions is omitted. In stead of the first, second, third and fourth servomotors 18, 19, 20 and 21, first and second servomotors 48 and 48 are used, the rotary shafts 48a and 48b of the first servomotors 48 are respectively connected with rotation converters 48c and 48d which are jointed the rotation shafts of the large rollers 14b and 16c of the first upper and lower conveyers 14 and '16, and the rotary shafts 49a and 49b of the first servomotors 49 are respectively connected with rotation converters 49c and 49d which are jointed the rotation shafts of the large rollers 15b and 17c of the second upper and lower conveyers 15 and 17.

Rising and lowering equipment 50 having a rising and lowering servomotor (not shown) is put in the lower position of the first lower conveyer 16, rising and lowering equipment 51 is put in the lower position of the second lower conveyer 17 in a space with the rising and lowering equipment 50, rotary shafts 50a and 51a of the rising and lowering equipments 50 and 51 are constituted to upper and down move the first and second upper conveyers 14 and 15, synchronous pulleys 50b and 51b provided the rising and lowering equipments 50 and 51, a belt 52 is wound the synchronous pulleys 50b and 51b, and the rotation of the rising and lowering equipment 50 is transmitted to the rising and lowering equipment 51.

In such embodiment, after the space between the first and second upper conveyers 14 and 15 and the first and second lower conveyers 16 and 17 is regulated the thickness of the process board 53, the process board 53 is inserted between the first upper conveyer 14 and the first lower conveyer 16, the first and second servomotors 48 and 49 are synchronously driven, and whereby the first and second upper conveyers 14 and 15 and the first and second lower conveyers 16 and 17 are driven.

When the process board 53 is moved between the first and second upper conveyers 14 and 15 and between the first and second lower conveyer 16 and 17, the numerical control router 11 is driven, the head structure 6 is moved along the beam 3 by the servomotor 7, the rising and lowering member 6a of the head structure 6 is lowered the predetermined position by the servomotor 8, the head 9 mounted the rising and lowering member 6a is lowered the predetermined position by the cylinder 10, the tool 9a mounted the head 9 is lowered between the opposite portion between the first and second upper conveyers 14 and 15 and the first and second lower conveyers 16 and 17, and the process board 53 of the opposite portion is processed by the tool.

The process board S3 is moved and positioned by the first and second upper conveyers 14 and 15 and the first and second lower conveyers 16 and 17, and the tool 9a is moved and positioned in the opposite position between the first and second upper conveyers 14 and 15 and the first and second lower conveyers 16 and 17 and processes the process board 53. Therefore, the first and second upper conveyers 14 and 15 and the first and second lower conveyers 16 and 17 are not injured by the tool 9a, and any support board for supporting the process board 53 is not need.

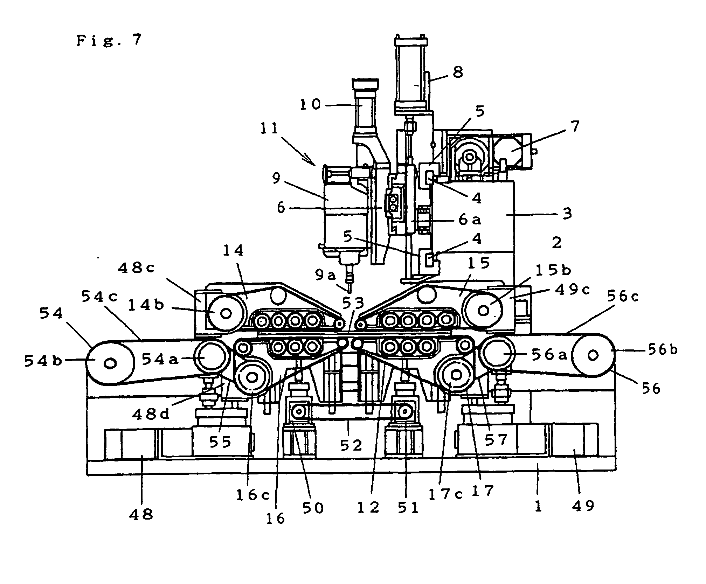

Referring to Fig. 7, 1 designates a support base, 2 a support columns, 3 a beam, 4 rails, 5 bearing, 6 a head structure, 7 a servomotor, 8 a servomotor, 9 plural head, 10 a cylinder, 11 a numerical control router, 12 and 13 support bases, 14 a first upper conveyer, 15 a second upper conveyer, 16 a first lower conveyer, 17 a second lower conveyer, 48 a first servomotor, 49 a second servomotor, 50 and 51 rising and lowering equipments, 52 a belt, 53 a process board, and these constitutions are the same as those in the above embodiment in Fig. 1 and the explanation of these constitutions is omitted. In this embodiment, a carry-in conveyer 54 is provided near the first upper and lower conveyers 14 and 16 and is constituted by a driving roller 54a, a rotary roller 54b and a belt 54c wound the rollers 54a and 54b, and a timing belt 55 is wound the driven roller 54a the large roller 16c of the first lower conveyer 16. A carry-out conveyer 56 is provided near the second lower conveyer 17 and is constituted by a driven roller 56a, rotation roller 56b and a belt 56c wound the rollers 56a and 56b, a timing belt 57 is wound the driven roller 56a of the carry-out conveyer 56 and the large roller 17c of the second lower conveyer 17.

Because the carry-in 54 and the carry-out conveyer 55 are provided in parallel with the first and second lower conveyers 16 and 17, the carry-in and carry-out of the process board 53 are easy and work efficiency is improved.

## Claims

1. A board processing unit comprising
a first upper conveyer (14) and a second upper conveyer (15) comprising opposite small rollers (14a, 15a) having a small diameter, large rollers (14b, 15b) having a large diameter provided remote from the small rollers respectively, belts (14d, 15d) wound around the rollers, first and second servomotors (18,19) driving the first upper conveyer (14) and the second upper conveyer (15);
a first lower conveyer (16) and second lower conveyer (17) comprising small rollers (16a, 17a) provided below and near the small rollers (14a, 15a) of the first and second upper conveyer (15, 16), middle rollers (16b, 17b) provided remote from the small rollers (14a, 15a), large rollers (16c, 17c) provided below the middle rollers (16b, 17b), belts (24, 26) wound around the rollers, third and fourth servomotors (20, 21) driving the first lower conveyer (16) and the second lower conveyer (17); whereby
a process board positioned on the first and second lower conveyers (16, 17) is pushed by the first and second upper conveyers (14, 15);
the first and second upper conveyers (14, 15) and the first and second lower conveyers (16, 17) are synchronously driven by the servomotors;
a tool (9a) located above the first and second upper conveyers (14,15; 16, 17) is passed through between the opposite portions of the first and second upper conveyers (14, 15) when the process board is processed by the tool.

2. A board processing unit as set forth in claim 1 wherein a plurality of small flat rollers (14c) are positioned flatly between the small rollers (14a, 15a) and the large rollers (14b, 15b) of the upper conveyers (14, 15).

3. A board processing unit as set forth in claim 1 wherein a plurality of flat middle rollers are positioned flatly between the small rollers (16a, 17a) and the middle rollers (16b, 17b) of the lower conveyers (16, 17).

4. A board processing unit as set forth in claim 1 wherein the servomotors (18,19, 20, 21) have pulleys on driving shafts connected by belts to the large rollers (14b, 15b; 16b, 17b) of the upper and lower conveyers respectively.

5. A board processing unit as set forth in claim 1 wherein a carry-in conveyer (22, 54) is provided near the first lower conveyer (16), a carry-out conveyer (23, 56) is provided near the second lower conveyer (17), and wherein the carry-in conveyer, the carry-out conveyer, and the first and second lower conveyers are synchronously driven.

6. A board processing unit as set forth in claim 5, wherein a timing belt (55) is wound around a large roller of the carry-in conveyer (54) and the large roller of the first lower conveyer (16), and a timing belt (57) is wound around a large roller of the carry-out conveyer (56) and the large roller of the second lower conveyer (17).

7. A board processing unit as set forth in claim 5 or 6 wherein the carry-in conveyer and the carry-out conveyer are respectively constituted in a long size.

8. A board processing unit as set forth in any of the claims 5 to 7 wherein the carry-out (23, 56) conveyer, and the first and second lower conveyers (16, 17) are synchronously driven by the first and second servomotors (18, 19).

9. A board processing unit as set forth in any of the preceding claims wherein the upper conveyers (14, 15) are lowered by gear boxes (28, 29).

10. A board processing unit as set forth in claim 9 wherein the first and second upper conveyers (14, 15) are risen and lowered by ball threads of first and second gear boxes (28, 29).

11. A board processing unit as set forth in claim 6 wherein the first and second upper conveyers (14, 15) are risen and lowered by rising and lowering shafts of gear boxes (28, 29) having a servomotor.

## Patentansprüche

1. Eine Plattenbearbeitungseinheit umfassend
ein erstes oberes Förderband (14) und ein zweites oberes Förderband (15), die gegenüberliegende kleine Rollen (14a, 15a) mit einem kleinen Durchmesser, große Rollen (14b, 15b) mit einem großen Durchmesser, die jeweils entfernt von den kleinen Rollen angeordnet sind, Antriebsriemen (14d, 15d), um die Rollen gewunden sind, einen ersten und einen zweiten Servomotor (18, 19), welche das erste obere Förderband (14) und das zweite obere Förderband (15) antreiben umfassen;
ein erstes unteres Förderband (16) und ein zweites unteres Förderband (17), die kleine Rollen (16a, 17a), die unter und in der Nähe der kleinen Rollen (14a, 15a) des ersten und zweiten oberen Förderbandes (15, 16) angeordnet sind, mittlere Rollen (16b, 17b), die entfernt von den kleinen Rollen (14a, 15a) angeordnet sind, große Rollen (16c, 17c), die unter den mittleren Rollen (16b, 17b) angeordnet sind, Antriebsriemen (24, 26), die um die Rollen gewunden sind, einen dritten und einen vierten Servomotor (20, 21), welche das erste untere Förderband (16) und das zweite untere Förderband (17) antreiben, umfassen;
wobei
eine zu bearbeitende Platte, die auf dem ersten und zweiten unteren Förderband (16, 17) positioniert ist, durch das erste und zweite obere Förderband (14, 15) gefördert wird;
das erste und zweite obere Förderband (14, 15) und das erste und zweite untere Förderband (16, 17) synchron durch die Servomotoren angetrieben werden;
ein Werkzeug (9a), das über dem ersten und zweiten Förderband (14, 15; 16, 17) angeordnet ist, wird zwischen den gegenüberliegenden Abschnitten des ersten und zweiten oberen Förderbandes (14, 15) hindurch bewegt, wenn die zu bearbeitende Platte durch das Werkzeug bearbeitet wird.

2. Plattenbearbeitunseinheit nach Anspruch 1, worin eine Vielzahl von kleinen, flachen Rollen (14c) flach zwischen den kleinen Rollen (14a, 15a) und den großen Rollen (14b, 15b) des oberen Förderbandes (14, 15) positioniert sind.

3. Plattenbearbeitungseinheit nach Anspruch 1, worin eine Vielzahl von flachen mittleren Rollen flach zwischen den kleinen Rollen (16a, 17a) und den mittleren Rollen (16b, 17b) der unteren Förderbänder (16, 17) positioniert sind.

4. Plattenbearbeitungseinheit nach Anspruch 1, worin die Servomotore (18, 19, 20, 21) Riemenscheiben auf den Antriebsschäften haben, die über Antriebsriemen mit den großen Rollen (14b, 15b; 16b, 17b) mit jeweils den oberen und unteren Förderbändern verbunden sind.

5. Plattenbearbeitungseinheit nach Anspruch 1, worin ein Einführförderband (22, 54) in der Nähe des ersten unteren Förderbandes (16) angeordnet ist, ein Ausgabeförderband (23, 26, 56) in der Nähe des zweiten unteren Förderbandes (17) angeordnet ist und worin das Einführförderband, das Ausgabeförderband und das erste und zweite untere Förderband synchron angetrieben werden.

6. Plattenbearbeitungseinheit nach Anspruch 5, worin ein Zahnriemen (55) um eine große Rolle des Einführförderbandes (54) und die große Rolle des ersten unteren Förderbandes (16) gewunden ist, und ein Zahnriemen (57) um eine große Rolle des Ausgabeförderbandes (56) und die große Rolle des zweiten unteren Förderbandes (17) gewunden ist.

7. Plattenbearbeitungseinheit nach den Ansprüchen 5 oder 6, worin das Einführförderband und das Ausgabeförderband jeweils länglich ausgeführt sind.

8. Plattenbearbeitungseinheit nach den Ansprüchen 5 bis 7, worin das Ausgabeförderband (23, 56) und das erste und zweite untere Förderband (16, 17) synchron über den ersten und zweiten Servomotor (18, 19) angetrieben werden.

9. Plattenbearbeitungseinheit nach den vorhergehenden Ansprüchen, worin die oberen Förderbänder (14, 15) mittels getrieben (28, 29) abgesenkt werden.

10. Plattenbearbeitungseinheit nach Anspruch 9, worin das erste und zweite obere Förderband (14, 15) angehoben und abgesenkt werden durch Kugelgewinde des ersten und zweiten Getriebes (28, 29).

11. Plattenbearbeitungseinheit nach Anspruch 6, worin das erste und zweite obere Förderband (14, 15) angehoben und abgesenkt werden durch anhebende und absenkende Wellen der Getriebe (28, 29), die einen Servomotor haben.

## Revendications

1. Unité d'usinage de planches comprenant
- un premier convoyeur supérieur (14) et un second convoyeur supérieur (15) comprenant les petits rouleaux opposés (14a, 15a) ayant un petit diamètre, les larges rouleaux (14b, 15b) ayant un large diamètre, prévus à distance respectivement des petits rouleaux, les courroies (14d, 15d) enroulées autour les rouleaux, les premier et second servomoteurs (18, 19) entraînant le premier convoyeur supérieur (14) et le second convoyeur supérieur (15);
- un premier convoyeur inférieur (16) et un second convoyeur inférieur (17) comprenant les petits rouleaux (16a, 17a) prévus sous et près des petits rouleaux (14a, 15a) du premier et du second convoyeur supérieur (15, 16), les rouleaux moyens (16b, 17b) prévus à distance des petits rouleaux (14a, 15a), les larges rouleaux (16c, 17c) prévus sous les rouleaux moyens (16b, 17b), les courroies (24, 26) enroulées autour les rouleaux, les troisième et quatrième servo-moteurs (20, 21) entraînant le premier convoyeur inférieur (16) et le second convoyeur inférieur (17); par lequel
- une planche à usiner positionnée sur les premier et second convoyeurs inférieurs (16, 17) est poussée par les premier et second convoyeurs supérieurs (14, 15);
- les premier et second convoyeurs supérieurs (14, 15) et les premier et second convoyeurs inférieurs (16, 17) sont entraînés de manière synchrone par les servo-moteurs;
- un outil (9a) logé au-dessus des premier et second convoyeurs supérieurs (14, 15; 16, 17) est passé parmi les portions opposées des premier et second convoyeurs supérieurs (14, 15) quand la planche à usiner est usinée par l'outil.

2. Unité d'usinage de planches selon la revendication 1, où une pluralité de petits rouleaux horizontaux (14c) sont positionnés horizontalement entre les petits rouleaux (14a, 15a) et les larges rouleaux (14b, 15b) des convoyeurs supérieurs (14, 15).

3. Unité d'usinage de planches selon la revendication 1, où une pluralité de rouleaux moyens horizontaux sont positionnés horizontalement entre les petits rouleaux (16a, 17a) et les rouleaux moyens (16b, 17b) des convoyeurs inférieurs (16, 17).

4. Unité d'usinage de planches selon la revendication 1, où les servo-moteurs (18, 19, 20, 21) ont des roues de transmission sur les arbres d'entraînement connectées par courroies aux larges rouleaux (14b, 15b, 16b, 17b) des convoyeurs supérieurs respectivement inférieurs.

5. Unité d'usinage de planches selon la revendication 1, où un convoyeur d'introduction (22, 54) est prévu près du premier convoyeur inférieur (16), un convoyeur d'élimination (23, 56) est prévu près du second convoyeur inférieur (17), et où le convoyeur d'introduction, le convoyeur d'élimination et respectivement les premier et second convoyeurs inférieurs sont entraînés de manière synchrone.

6. Unité d'usinage de planches selon la revendication 5, où une courroie de synchronisation (55) est enroulée autour le large rouleau du convoyeur d'introduction (54) et le large rouleau du premier convoyeur inférieur (16), et une courroie de synchronisation (57) est enroulée autour un large rouleau du convoyeur d'élimination (56) et le large rouleau du second convoyeur inférieur (17).

7. Unité d'usinage de planches selon la revendication 5 ou 6, où le convoyeur d'introduction et le convoyeur d'élimination sont constitués respectivement dans une longue dimension.

8. Unité d'usinage de planches selon l'une quelconque des revendications 5 à 7, où le convoyeur d'élimination (23, 56) et les premier et second convoyeurs inférieurs (16, 17) sont entraînés de manière synchrone par les premier et second servo-moteurs (18, 19).

9. Unité d'usinage de planches selon l'une quelconque des revendications antérieures, où les convoyeurs supérieurs (14, 15) sont descendus par les boîtes de vitesses (28, 29).

10. Unité d'usinage de planches selon la revendication 9, où les premier et second convoyeurs supérieurs (14, 15) sont levés et descendus par les filets à bille des premier et second boîtes de vitesses (28, 29).

11. Unité d'usinage de planches selon la revendication 6, où les premier et second convoyeurs supérieurs (14, 15) sont levés et descendus par les arbres de levage et de descente des boîtes de vitesses (28, 29) ayant un servo-moteur.
